# EUROPEAN PATENT APPLICATION

(11) **EP 2 124 163 A2**
(43) Date of publication of application: **25.11.2009**
(21) Application number: 08172393.4
(22) Date of filing: 19.12.2008
(51) Int. Cl.: G06F 21/00

(54) **Revocation status checking for digital rights management**

(30) Priority: 21.12.2007 US 963344
(71) Applicant: Nokia Corporation, 02150 Espoo (FI)
(72) Inventor: Tuoriniemi, Henrik Samuli, 90100 Oulu (FI)
(74) Representative: Ruuskanen, Juha-Pekka

(57) **Abstract**

In accordance with an embodiment, a method, apparatus or tangible computer medium (which stores computer executable code or program code) performs or facilitates: maintaining information identifying a plurality of devices with which interaction has occurred; transmitting the information identifying the plurality of devices to a remote trusted party; receiving from the trusted party status information pertaining to a trustworthiness of the identified devices based on the transmitted information; and controlling subsequent interaction relating to transfer or exchange of access rights for electronic content with one or more devices based on the received status information corresponding to the one or more devices.

## Description

### FIELD OF THE INVENTION

The present invention relates to communications and, more particularly, to techniques for managing the distribution of and access to content and its access rights among multiple devices.

### BACKGROUND

Content, such as television broadcasts, Internet content, and content stored on prerecorded media are valuable commodities in the current economy. Accordingly, there is an interest in protecting such content from illegal copying. Presently, content may be delivered from a content distributor to particular devices in various formats. For example, content may be delivered in an unprotected or encrypted manner. Also, content may be protected using conditional access (CA) or digital rights management (DRM) technologies.

### SUMMARY

In accordance with an embodiment, a method, apparatus or tangible computer medium (which stores computer executable code or program code) performs or facilitates: maintaining information identifying a plurality of devices with which interaction has occurred; transmitting the information identifying the plurality of devices to a remote trusted party; receiving from the trusted party status information pertaining to a trustworthiness of the identified devices based on the transmitted information; and controlling subsequent interaction relating to transfer or exchange of access rights for electronic content with one or more devices based on the received status information corresponding to the one or more devices.

In accordance with another embodiment, a method, apparatus or tangible computer medium (which stores computer executable code or program code) performs or facilitates: receiving from a device information identifying devices with which interaction has occurred with the communications device; generating status information as to the trustworthiness of the identified devices based on the received information; and transmitting the status information to the device.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The various exemplary embodiments will be described with reference to the accompanying drawings, wherein:

FIG. 1 is a diagram of an exemplary operational environment, in which content and access rights thereto may be distributed according an embodiment;

FIG. 2 is a block diagram of one exemplary operational scenario;

FIG. 3 is a block diagram of another exemplary operational scenario;

FIG. 4 is a block diagram of an exemplary access module and an exemplary user output module;

FIG. 5 is a flowchart of an exemplary process by which a device allows access to content and/or access rights thereto in accordance with an embodiment;

FIG. 6 is a flowchart of an exemplary process by which a device obtains status information of other devices in accordance with an embodiment;

FIG. 7 is a flowchart of an exemplary process by which a trusted party provides status information of devices to a device in accordance with an embodiment;

FIG. 8 is a block diagram of an exemplary computer system in accordance with an embodiment; and

FIG. 9 is a block diagram of an exemplary removable or portable memory device or unit in accordance with an embodiment.

### DETAILED DESCRIPTION OF VARIOUS EMBODIMENTS

### I. OPERATIONAL ENVIRONMENT

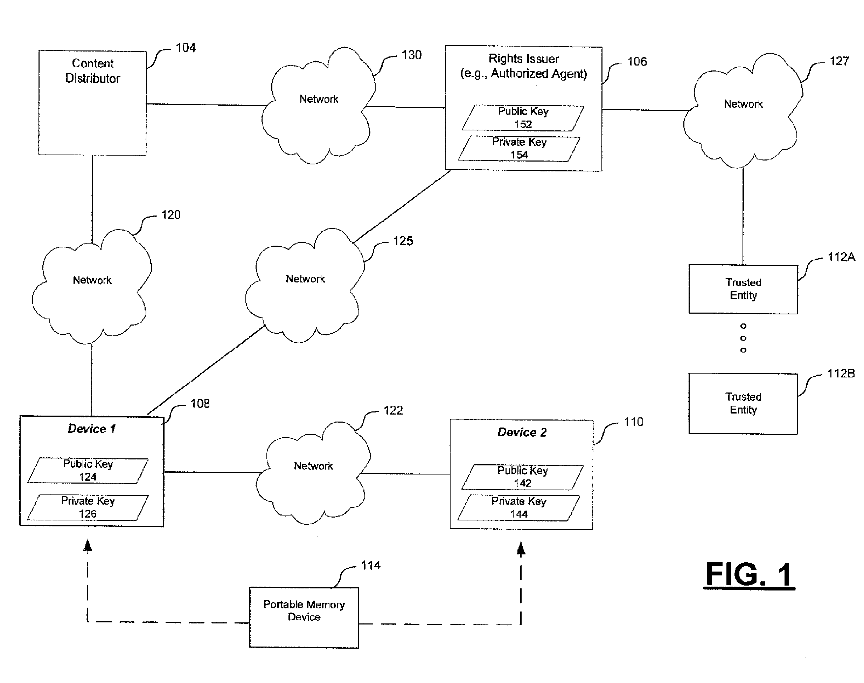

Before describing the various embodiments in detail, it is helpful to describe an environment in which one or more of the exemplary embodiments may be used. Accordingly, FIG. 1 is a diagram of an operational environment where content and access rights thereto may be distributed among devices according to an embodiment. This environment includes a content distributor 104, an issuer of rights (e.g., Rights Issuer or authorized agent) 106, a first device 108, a second device 110 and portable memory device 114. Devices 108, 110 and 114 may be associated with a single user or different users. Both content distributor 104 and rights issuer 106 may be an issuer of access rights.

Access rights generally include usage rules or the like associated or linked to some content. Access rights may be a voucher which may include data identifying the corresponding content item, the content distributor, and the usage rules. The usage rules may reflect a collection of permissions, constraints and/or obligations under which access may be granted to a user or some device. A voucher may also include one or more encryption keys either in plain form (public keys) or encrypted. The voucher may have restricted validity.

By way of example, usage rules may state the rights of the user or possessor of the corresponding content items to render, read, write, copy, store, move and/or transfer the received content. Usage rules may restrict the rendering of content items to a prescribed number of times or the distribution or sharing to a prescribed number of users/devices. In addition, usage rules may restrict the transfer of content items to other devices and/or other users. Usage rules may also set temporal restrictions regarding the use of corresponding content items. For example, a temporal usage rule may require that a content item shall only be stored or accessible for a prescribed period of time, and geographical usage rule may require that a content item shall only be stored or accessible in a prescribed region. In addition, usage rules may only have temporally limited validity.

Usage rules may be expressed as one or more data files. These data files may be in various formats. For example, the data files may be in an XML-based markup language such as the Open Digital Rights Language (ODRL) or the eXtensible rights Markup Language (XrML). The data files may also be directly in XML. ODRL provides for the expression of terms and conditions involving content, such as permissions, constraints, and obligations. XrML provides techniques for specifying and managing rights and conditions associated with content.

An example of access rights is a voucher such as the Rights Object described and implemented in the Open Mobile Alliance (OMA) Digital Rights Management (DRM) standard, Version 2.0. In this standard, each DRM content has a Rights Object associated therewith. The DRM content may not be accessible without its associated Rights Object, which may be distributed along with or separately from its associated DRM content. It has also been currently proposed to extend the OMA DRM standard to allow for the distribution or sharing of a Rights Object and content between multiple devices, e.g., known or unknown devices. Content and Rights Objects may be distributed or exchanged between devices across a wireline or wireless network connection or through or to a device, such as a removable or portable memory device. These implementations are described in greater detail by the Open Mobile Alliance, Ltd. in their documents: Secure Content Exchange Requirements, Candidate Version 1.0-20 October 2006, OMA-RD-SCE-V1_0-20061020-C (2006); and OMA Secure Removable Media Requirements, Candidate Version 1.0 - 10 Oct 2006, OMA-RD-SRM-V1_0-20061010-C (2006).

Turning back to FIG. 1, content distributor 104 may include a content provider and/or a service provider, which transmits content items and/or access rights to one or more devices or offers services related to the distribution of content items. Examples of content items include (but are not limited to) video broadcasts, multimedia content, hypertext documents, and files. Content distributor 104 may be, for example, a digital video broadcaster. Such transmissions may be in either protected (e.g., conditional access encrypted) or unencrypted formats. 1f implemented in a service environment, a device may need to register with the service beforehand. The registration may involve providing identification information of the user or device, payment or account information and so forth to the content distributor, and the provision of information or data to facilitate delivery of the service, including various keys (e.g., content item encryption key (CIEK), pricing attribute key, etc.) and pricing information to the device.

Although content distributor 104 may transmit content item as well as access rights, the access rights may also be delivered separately or modified subsequently through a trusted or authorized agent. Thus, a content item and its associated access rights may be transmitted together or at different times, or across different media. Such content items and access rights may include pointers, indexes or associating data which allows them to be associated with each other when necessary.

As shown in FIG. 1, public and private encryption key pairs may also be associated with devices 108 and 110. In particular, first device 108 has a public key 124 and a corresponding private key 126. Second device 110 has a public key 142 and a corresponding private key 144. In addition, a public key 152 and a corresponding private key 154 are associated with an issuer of rights, e.g., rights issuer 106. With corresponding public and private keys, these devices may employ asymmetric encryption techniques to encrypt and decrypt information, such as content items, access rights, encryption keys, pricing attributes or any other information to be protected.

Various networks couple the devices of FIG. 1. For instance, a network 120 couples content distributor 104 and first device 108, a network 122 couples first device 108 and second device 110, a network 125 couples first device 108 and rights issuer 106, a network 130 couples rights issuer 106 and content distributor 104, and a network 127 couples rights issuer 106 to one or more trusted entities 112A, 112B.

Networks 120, 122, 125, 127 and 130 may each be any suitable network that enables the transfer of information between the coupled devices and entities. For instance, network 120 may be a broadcast network. Examples of broadcast networks include terrestrial and satellite wireless television distribution systems, such as DVB-T, DVB-C, DVB-H (DVB handheld), ATSC, and ISDB systems. Network 120 may also be a broadcast cable network, such as a Data Over Cable Service Interface Specification (DOCSIS) network. Alternatively, network 120 may be a packet-based network, such as the Internet.

As a further example, one or more of networks 120, 122, 125, 127, 130 may be wireline or wireless cellular networks. In addition, one or more of these networks may be short-range proximity networks, which employ technology, such as Bluetooth or Ultra-Wideband (UWB) or etc. Accordingly, one or more of devices 104, 106, 108, and 110 may be implemented as mobile devices such as mobile phones, mobile personal digital assistant (PDA), mobile computer, etc. Although FIG. 1 illustrates distinct networks, in embodiments, a single network may replace two or more of networks 120, 122, 125, 127 and 130.

Moreover, between the devices and entities of FIG. 1, there may be in some embodiments not only a single network but two or more networks. These networks may be used for messaging and/or (content) data transfer between the devices and entities. For example, a user terminal (such first device 108) may comprise a DVB receiver, a mobile phone and in addition have a Bluetooth connection.

As further shown in FIG. 1, rights issuer 106 may be involved in managing the distribution of content among devices. Rights issuer 106 is trusted by content distributor 104 and is authorized to act on its behalf. Thus, when rights issuer 106 is implemented as an entity distinct from content distributor 104, it may perform acts that, in principle, are imputed to content distributor I04. Examples of such acts include changing existing access rights (e.g., usage rules), creating new access rights (e.g., usage rules), transacting business for access to content such as determining pricing for content and obtaining payments, and so forth. Other exemplary acts may include modification of the binding of content to a device or a set of multiple devices also known as a domain, and modification of a domain. The domain may alternatively be defined and modified by a device, e.g., first device 108, which may act as the managing device.

Content distributor I04 may, however, set limits to the authorization given to rights issuer 106. For instance, content distributor 104 may impose temporal limits on this authorization. Such temporal limits may specify a particular time (e.g., month/day/year) at which this authorization expires. In addition, content distributor 104 may revoke this authorization at any time. Moreover, any authorization that content distributor 104 grants to rights issuer 106 may include various limitations and/or qualifications. For example, content distributor 104 may limit authorization to certain types of content. Such content types include low-priced content, obsolete content, lower grade content, or any combination of these. Thus, content distributor 104 may impose restrictions (or limited authority) upon rights issuer 106 so that it is not allowed to perform all of the functions that content distributor 104 may perform.

Rights issuer 106 may be locally accessible by devices, such as first device 108. For example, rights issuer 106 may be positioned at a publicly available location, such as a kiosk that is near first device 108. Accordingly, in such implementations, network 125 may be an ad hoc proximity network, such as a Bluetooth network. Further, rights issuer 106 may be located in a different area or region than content distributor 104. In such locations, the "original" owner of rights (i.e., content distributor 104) may not be accessible. Thus, rights issuer 106 provides for local content access instead of central content access from content distributor 104. This feature relieves communications and processing loads from content distributor 104.

Although FIG. 1 only shows a single content distributor, rights issuer 106 may be trusted by multiple content distributors. Similarly, although FIG. 1 only shows a single rights issuer (e.g., authorized agent), content distributor 104 may trust multiple rights issuers. Also, in the various exemplary embodiments herein, content distributor 104 may perform the role of rights issuer 106 or vice versa. As described above, rights issuer 106 may be implemented in a mobile phone. In such implementations, rights issuer 106 may operate as a personal rights issuer for an individual, or a shared rights issuer between multiple people (e.g., family members).

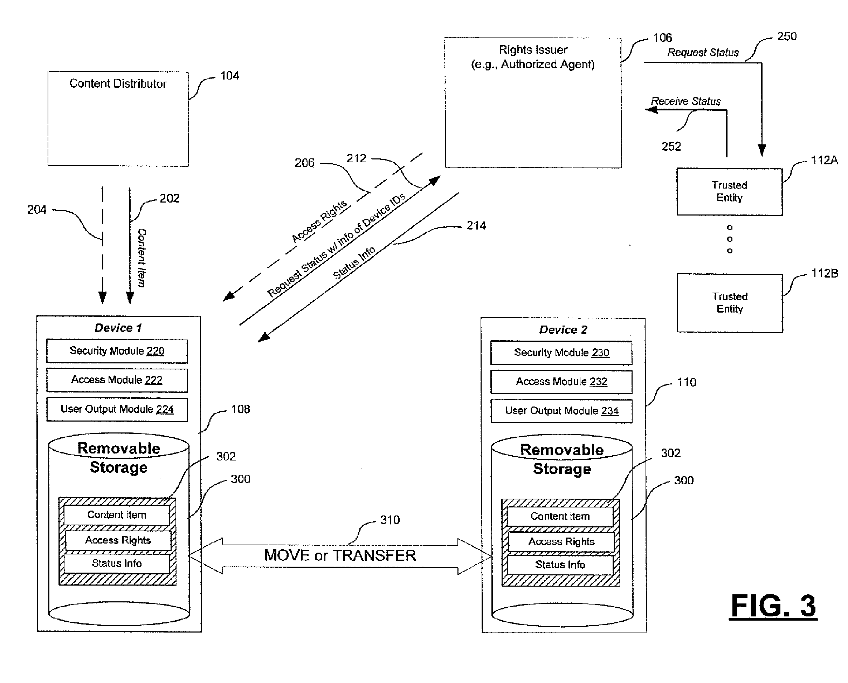

As noted above, content and access rights thereto, e.g., in the form of a voucher or Rights Object, can be distributed or exchanged among multiple devices. For example, content distributor 104 may transmit a content item, along with access rights, that is authorized for reception by first device 108. These two items may be provided together such as from the same source or separately from different sources, as desired. Upon receipt of these items or subsequent thereto, the user of first device 108 may desire to forward, transfer, transmit, move, distribute, etc. this content and/or the access rights thereto to one or more other devices, such as second device 110. This may be performed through communications or connection across a network, e.g., network 122. Alternatively, such information may be stored or transferred onto portable memory device 114 at or by first device 110 and transferred to second device 110 through device 114. Examples of memory device 114 are described below with reference devices 300, 814, 816 and 900 of FIGS. 3, 8 and 9.

According to the various embodiments, one device may transfer the content item (as well as other associated information) and/or the access rights to a receiving device subject to certain conditions, for example, such as the trustworthiness (or untrustworthiness) of the receiving device. Thus, as a pre-condition for allowing access (e.g., copy, render, write, read, exchange, transmit, distribute, transfer, etc.) to the content or its access rights or both, a device may check a status of the other device pertaining to its trustworthiness. This may involve, for example, performing a revocation status check, e.g., source device checks the revocation status (e.g., certificate revocation status) or the like of a sink device and/or vice versa. For instance, if the status of a sink device has been revoked (e.g., the sink device's certificate is no longer valid, etc.) then the access rights and/or the content are not made accessible to the other device. Otherwise, if its status is valid or not revoked then the access rights or the content may be made accessible to the other device. The accessibility of access rights and/or content may be further subject to other limitations, such as provided by the access rights.

Revocation status checking can be done using approaches such as for example Certificate Revocation Lists (CRL) or Online Certificate Status Protocol (OCSP) or the like. However, the use of CRLs may involve significant use of a device's storage space and processing since a CRL may contain information as to numerous other devices or entities which may never interact with a device such as first device 108. Further, the use of OCSP would require a device to maintain or have available communications capacity to communicate with an OCSP responder, which may not always be the case such as for non-networked devices or those that are not always connected to a network or the like.

Accordingly, in one or more exemplary embodiments, a device (e.g., first device 108, memory device 114, etc.) may keep track, collect and/or maintain information as to those devices with which some interaction has occurred, e.g., contact, communications, connections, transaction, exchange or transmission or transfer or distribution of data (e.g., content, access rights, etc.), etc. The device may request from a trusted party, e.g., content distributor 104 or rights issuer 106, status information as to a trustworthiness (or untrustworthiness) of selective devices, such as those with which interaction has occurred. For example, the device may transmit to a trusted party information identifying (e.g., device identifiers (IDs)) those devices with which interaction has occurred.

The trusted party may then generate customized or selective status information pertaining to the trustworthiness (or untrustworthiness) of the identified devices. This may entail the trusted party, e.g., content distributor 104 or rights issuer 106, requesting or gathering status information from other entities such as trusted entities 112A, 112B (and those may further request status from other entities and so on). Trusted entities 112A, 122B may be an OCSP responder, Certificate Authority (CA) or other trusted entity. The trusted party can then obtain the specific trustworthiness status for each identified device from maintained, requested or gathered information, and provide this customized status information to the status requesting device for use in interacting with other devices (e.g., data transfer, etc.).

This status information may take the form of a list (e.g., a good or trustworthy device list (white list) and/or a bad or untrustworthy device list (black list), etc.) and may correspond to status revocation information for those identified devices (e.g., a list of revoked devices or unrevoked devices from those identified). Status revocation checking is simply provided as one example of the type of status information which may be employed to check a trustworthiness of a device. As such, other types of information depending on security or authentication protocol may also be employed.

The status information may be customized for a user or device or event a domain (e.g., a group of devices) to reduce storage and processing over other approaches such as the use of CRLs while providing a compromise to the online status checking of OCSP. Quite often, devices connect only to a few other devices. Thus, such an arrangement may be of use for example for those devices with limited processing, network access and/or storage capabilities. For a domain, a single device may collect the device IDs of those devices with which any one of the devices in the domain has interacted, and obtain status information for the identified devices from a trusted party. Alternatively, status information can be exchanged between devices in the domain.

A device may be configured to request or update or modify such status information upon predetermined conditions, which may be defined by the user. For example, customized status information may also be requested from various trusted parties, such as an issuer of rights, e.g., content distributor 104 or rights issuer 106, during or as part of a transaction to access some content therefrom. A device may also be set to request or update or modify such information periodically, upon an available network or communications access to a trusted party from which such information may be obtained, at a predetermined time(s), at the expiration of a validity of the current status information, etc. Customized status information may also be requested, updated or modified upon a user command. The operations of updating or modifying may involve transmission of an updated list of devices with which interaction has occurred. This updated list may also be subject to update or modification under certain conditions (e.g., after a period of time, new device interactions, etc.).

As described herein, the device may maintain and employ the customized status information to check the trustworthiness (or untrustworthiness) of another device prior to proceeding with any further interactions or particular types of interactions with such other device. This interaction may involve or relate to the transfer, copying, reading, writing, moving, transmission or distribution of access rights and/or content between the devices. This may cover the scenarios in which a copy of the data (e.g., content and/or access rights) is provided to another device, or the original data is completely moved from one device to another device.

As a further exemplary aspect, devices in general may exchange their and other's customized status information (e.g., collected over course of time). Through such exchange, it is possible to build networks of trustworthy or untrustworthy (e.g., revoked) devices. For example, a network of trustworthy or untrustworthy device can be built and expanded as the devices interact with other devices (e.g., like a tree branching out). In this way, a domain of devices may be created and updated to access and share particular content.

### II. OPERATIONAL SCENARIOS

According to the various exemplary embodiments, a number of exemplary scenarios may be employed to distribute or allow access to data, such as content and/or access rights thereto and/or status information, etc. between devices.

### A. First Exemplary Scenario

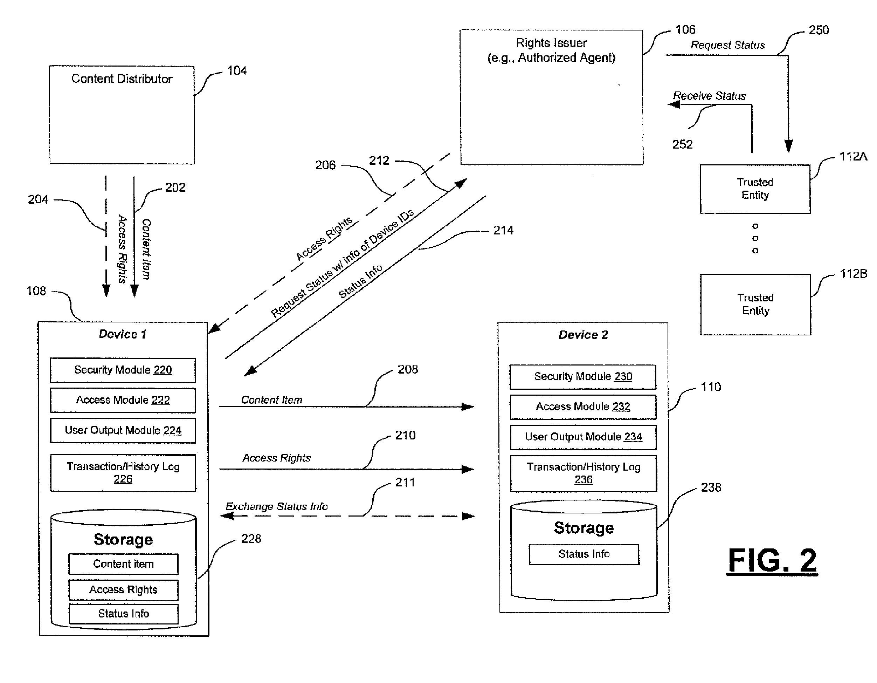

FIG. 2 is a block diagram of one exemplary operational scenario. As shown in this example, first device 108 may include a security module 220 for controlling access to data such as stored in storage 228, an access module 222 for accessing content such as content items with access rights associated therewith, user output module 224 for outputting accessed content, and a transaction/history log 226 to track and collect information on other devices with which interaction has occurred. The information collected may include identification (1D) information of the devices, the time of any interaction, the type of interaction (e.g., exchange of or access to access rights, content, etc.), type of communications (e.g., wire connection, wireless connection, secure connection, unsecure connection, etc.) or any information which may be used to select which devices to request status information on.

Second device 110 also includes similar components, such as a security module 230, access module 232, user output module 234, transaction/history log 236 and storage 238.

In an exemplary operation, first device 108 receives content item from content distributor 104 as shown by reference 202 and may receive access rights thereto (e.g., voucher, Rights Object, usage rules, etc.) along with the content item as shown by reference 204 or separately from another source, e.g., rights issuer 106, as shown by reference 206.

First device 108 may also receive status information from a trusted party, such as rights issuer 106. For example, as noted above, first device 108 can request status information for particular devices, e.g., those with which interaction or particular types of interaction has occurred. This may involve transmitting ID information for these particular devices to a trusted party as shown by reference to 212. In this example, the trusted party may be rights issuer 106, and the ID information may be provided during a transaction for access rights for some content. As discussed herein, such a request may be initiated automatically under conditions which may be predetermined and set in advance, or manually upon a user request or command.

The trusted party, e.g., rights issuer 106, thereafter generates customized status information according to or based on the received ID information of the devices from gathered and/or maintained information on statuses. For example, rights issuer may request the status of the particular identified devices from one or more trusted entities 112A, 112B (e.g., CA, OCSP responder, etc.) as shown by reference 250, and receive the status therefrom as shown by reference 252. The gathering of statuses may involve multiple requests and responses from one level of trusted entities to another level and so on. Rights issuer 106 can then create customized status information for the requesting device, e.g., first device 108, according to the transmitted ID information of devices. This customized information may relate to status revocation and may be in the form of one or more lists (e.g., a good, trustworthy or white list and/or a bad, untrustworthy or black list). The status information may be provided in other exemplary forms to enable a device to ascertain a trustworthiness (or untrustworthiness) of other devices. The created status information can then transmitted to first device 108 as shown by reference 214 and stored in storage 228.

In the event that data such as access rights, content and/or status information, is to be transmitted to, transferred to, moved to, exchanged with, distributed to or made accessible to another device, e.g., second device 110, first device 108 determines whether second device 110 is trustworthy in view of the status information. For example, first device 108 may check if the status has been revoked for second device, e.g., whether its certificate is still valid, by evaluating the status information. If second device 106 is determined to be untrustworthy, first device 108 does not provide access to data such as access rights and/or content and/or status information. 1f trustworthy, first device 108 provides second device 110 with access (e.g., read, write, copy, move, etc.) to such data as shown by reference to 208, 210 and 211.

Although first device 108 is shown as receiving content item from content distributor 104, first device 108 may simply be a downstream device which has received a content item and access rights thereto from some other device or through superdistribution.

### B. Second Exemplary Scenario

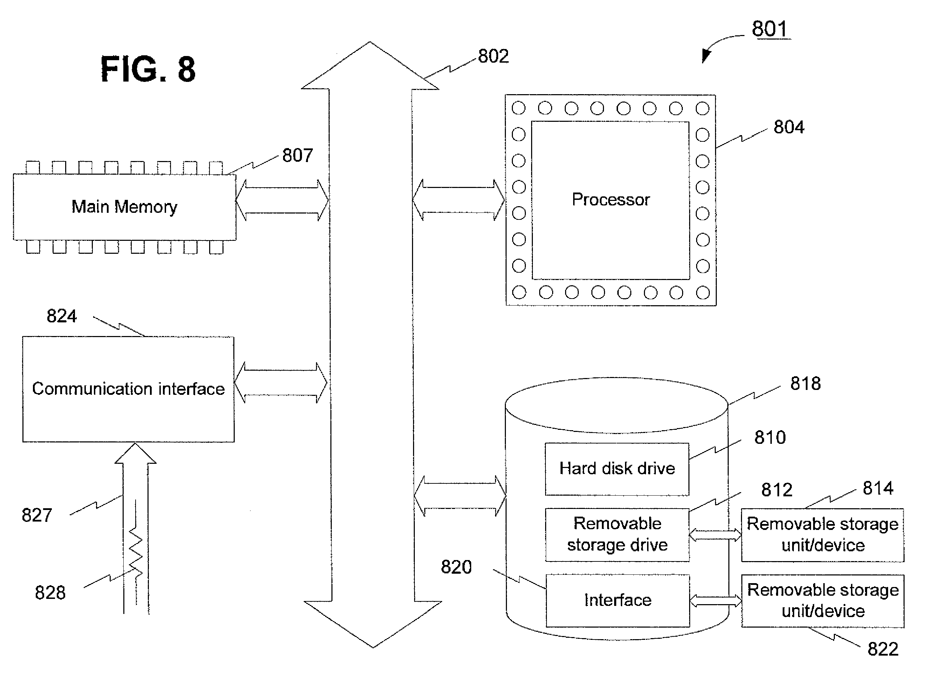

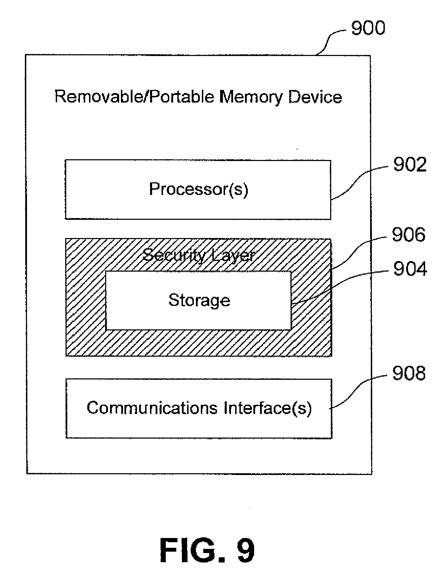

FIG. 3 is a block diagram of another exemplary operational scenario. This scenario is similar to the exemplary scenario in FIG. 2 except that a removable or portable storage device, e.g., removable storage 300, is used to obtain and transfer data, such as content item, access rights and/or status information, as shown by reference 310. Removable storage 302 may have a security layer 302 to perform authentication or other security related features, such as described herein, to prevent the unauthorized access to data stored thereon. Examples of removable storage 300 are described below with reference to FIGS. 8 and 9.

Security checking prior to data access or transfer may occur in several situations depending on how or when data is to be transferred or made accessible. For example, security checking for trustworthiness may occur when data is to be made accessible (e.g., read, write, copy, move, etc.) to removable storage 300 from first device, and when data is to be made accessible to second device 110 from removable storage 300.

Although this example shows the removable storage 300 being connectable to first and second devices 108, 110, removable storage 300 may be a device with communications capabilities such as wireless and wireline communications. As such, removable storage 300 may able to independently obtain and access data, such as status information, access rights and/or content, from rights issuer 106 and provide such data to other devices accordingly, as desired. Removable storage 300 may be communicatively connected with other devices through physical connection (e.g., interface/line) or wirelessly or a combination thereof.

### C. Digital Certificates

The scenarios described herein may involve the authentication of devices and the transfer and use of secret information, such as content, access rights, customized status information and/or pricing attribute keys or other keys. To ensure that such secret information is encrypted with a public key, the public keys of devices, such as rights issuer 106 and second device 110, may be transferred to other devices in digital certificates. This verifies that the public keys belong to these devices and establishes these devices as trusted entities.

The devices in the above scenarios and herein may employ a certificate authority (e.g., trusted entity 112A or 112B) to embed their public keys in a digital certificate. In embodiments, the certificate authority creates such certificates by encrypting a device's public key (as well as other identifying information) such that it may be decrypted using the certificate authority's public key. This public key is publicly available (e.g., through the Internet). When a device receives a digital certificate, it may obtain the sender's public key by decrypting certificate with the certificate authority's public key.

As described herein, a device may evaluate the trustworthiness (or untrustworthiness) of other device by for example checking whether the other device's digital certificate is still valid or has been revoked.

### III. ACCESS AND OUTPUT MODULES

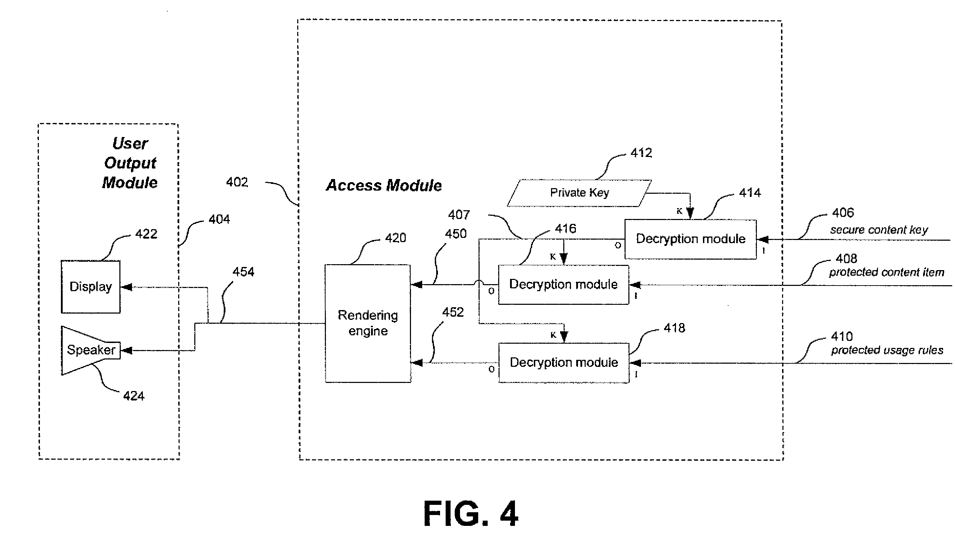

As described above, first device 108 and second device 110 may each include an access module and a user output module. An example of these modules is shown in FIG. 4.

As shown in FIG. 4, an access module 402 may include decryption modules 414, 416, and 418. In addition, access module 402 may include a rendering engine 420 coupled to decryption modules 416 and 418. These elements may be implemented in hardware, software, firmware, or in any combination thereof.

Each of decryption modules 414, 416, and 418 has an input interface (indicated with an "I") for receiving encrypted data, and an input interface (indicated with a "K") for receiving an encryption key. In addition, each of these modules includes an output interface (indicated with an "O") for outputting decrypted data.

Access module 402 receives secure content key 406, protected content item 408, and protected usage rules 410. Secure content key 406 is a content key encrypted with a public key of the device in which access module 402 is implemented. As shown in FIG. 4, decryption module 414 decrypts secure content key 406 with a corresponding private key 412 of the device in which access module 402 is implemented. This decryption produces a content key 407.

FIG. 4 shows that decryption module 416 receives protected content item 408 and content key 407 to generate content item 450. Decryption module 418 receives protected usage rules 410 and content key 407 to generate usage rules 452. This generation may be based on symmetric encryption techniques, since content key 407 may have also been used to generate protected content item 408, and protected usage rules 410.

Content item 450 and usage rules 452 are sent to rendering engine, where content item is decoded or rendered into an output signal 454. This decoding or rendering is subject to any restrictions or conditions of usage rules 452.

FIG. 4 shows that user output module 404 may include one or more displays 422, and one or more speakers 424 for outputting signal 454 to a user. However, user output module 404 may include other devices, as would be apparent to persons skilled in the relevant arts.

The above is simply provided as an example, and other access and user module implementations may be employed to access and output or render content (protected or unprotected).

### IV. PROCESS

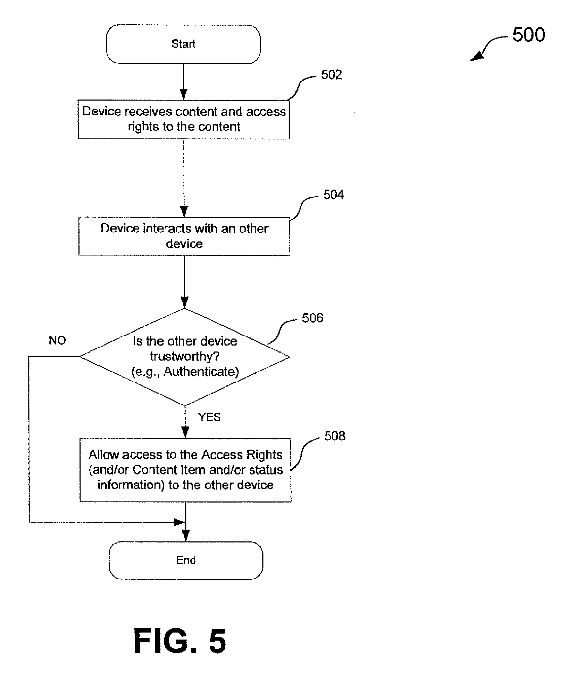

FIG. 5 is a flowchart of an exemplary process 500 by which a device may allow access to content, access rights and/or status information or other types of information thereto in accordance with an embodiment. The process 500 may be performed for example by devices 106, 108, 114 of FIG. 1.

The process 500 begins with step 502 in which the device receives or maintains content and access rights to the content. At step 504, the device interacts or is in the process of interacting with another device. At step 506, the device determines whether the other device is trustworthy. This may involve an authentication or security operation, e.g., checking a status of the other device to see whether the other device's certificate has been revoked or checking a revocation status. For example, the device checks the status information which may include customized status information from trusted party, e.g., rights issuer 106 or content distributor 104, or from other trustworthy devices through transfer or exchange of status information, or generally from other devices.

If the other device is trustworthy, then the device allows access to the access rights, content and/or other information such as status information at step 508. Otherwise, if the other device is untrustworthy, e.g., its status has been revoked, then the process 500 terminates.

By way of example, the process 500 may be implemented when transmitting or exchanging or accessing data (e.g., access rights, content, etc.) between first device 108 and second device 110, first device 108 and memory device 114, or memory device 114 and second device 110. Thus, a security check with the status information may be performed whenever data is to be accessed, transmitted or exchanged between devices.

When a removable or portable memory (e.g., device 114, 300) is used, the status information may be transmitted from the trusted party to the portable memory device directly or via another device depending on the communications capability of the portable memory device or whether the portable memory device is attached to a status information requesting device (e.g., first device 110) during status information transaction.

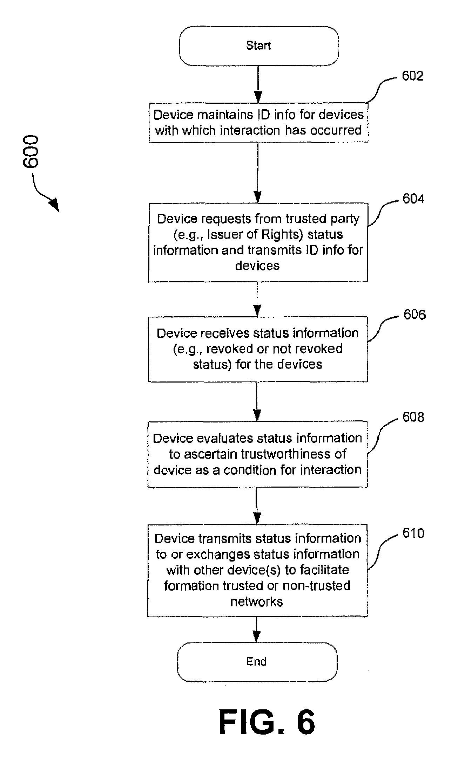

FIG. 6 is a flowchart of an exemplary process 600 by which a device obtains status information of other devices in accordance with an embodiment. The process 600 may be performed for example by devices 106, 108, 114 of FIG. 1.

The process 600 begins with step 602 in which the device maintains identification (ID) information for devices with which interaction has occurred. For example, the device may track devices with which interaction has occurred and collect and store information identifying such devices, such as in a history or transaction log (e.g., ID, date, user and/or type of transaction) containing the IDs of such devices. This information may be maintained or generated from transaction history or log or the like.

At step 604, the device requests from trusted party (e.g., issuer of rights) new or updated status information and transmits ID information for the devices with which interaction has occurred. The ID information may be new or updated information. For example, the list of IDs to send may be based on predetermined parameters, such as the type of interaction (e.g., exchange of access rights, connection, etc.), time period of interaction (e.g., last 30 days), the user of the device, etc. These parameters may be predefined or set or modified by a user.

At step 606, the device receives status information for the identified devices. At step 608, the device evaluates the status information to ascertain trustworthiness of other device(s) as a condition for interaction. As described herein, the interaction may relate to access or distribution of data, e.g., access rights, content, etc.. At step 610, the device may also transmit status information to or exchange status information with other device(s) to facilitate formation trusted or non-trusted networks.

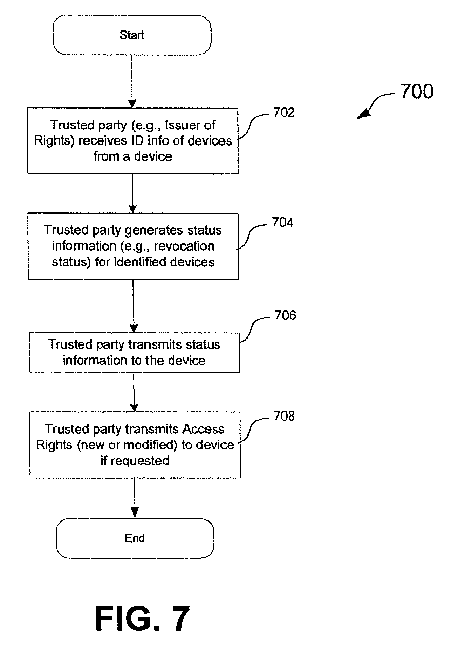

FIG. 7 is a flowchart of an exemplary process 700 by which a trusted party (or entity) provides status information of devices to a status requesting device in accordance with an embodiment. The process 700 may be performed for example by trusted party, such as for example an issuer of rights, e.g. content distributor 104, rights issuer 106, etc. of FIG. 1. This process may be performed as part of a transaction to obtain access rights for content, during registration for some service or product (e.g., purchased content), etc.

The process 700 begins with step 702 in which the trusted party receives identification (ID) information of devices from a status requesting device. As noted above, these identified devices can be those devices with which the requesting device has interacted with. At step 704, the trusted party generates status information for or according to the identified devices. As noted above, this may involve for example the gathering of statuses from other trusted entities and the creation of the status information therefrom for to the identified devices. At step 706, the trusted party transmits the status information to the device. At step 708, the trusted party may also transmit access rights (new or modified) to device if requested.

The various processes described herein in general may be implemented by software including firmware through one or more processors or one or more hardwired or integrated circuits or a combination thereof. The software implementation may take the form of a tangible medium having computer executable code which when read and executed by one or more processors performs the processes described above and herein. These processes are provided as a few examples. The processes are not limited to the described operations or order of operations which can be modified to perform the various functions described herein.

### V. COMPUTER SYSTEM

As described above, devices 104, 106, 108, and 110 may include software components. Accordingly, these devices may be implemented with one or more computer systems. An example of a computer system 801 is shown in FIG. 8. Computer system 801 represents any single or multi-processor computer. Single-threaded and multi-threaded computers can be used. Unified or distributed memory systems can be used.

Computer system 801 includes one or more processors, such as processor 804. One or more processors 804 can execute software implementing the functionality described above. Each processor 804 is connected to a communication infrastructure 802 (for example, a communications bus, cross-bar, or network). Various software embodiments are described in terms of this exemplary computer system. After reading this description, it will become apparent to a person skilled in the relevant art how to implement the features and functions as described herein using other computer systems and/or computer architectures.

Computer system 801 also includes a main memory 807 which is preferably random access memory (RAM). Computer system 801 may also include a secondary memory 808. Secondary memory 808 may include, for example, a hard disk drive 810 and/or a removable storage drive 812, representing a floppy disk drive, a magnetic tape drive, an optical disk drive, etc. Removable storage drive 812 reads from and/or writes to a removable storage unit 814 in a well known manner. Removable storage unit 814 represents a floppy disk, magnetic tape, optical disk, etc., which is read by and written to by removable storage drive 812. As will be appreciated, the removable storage unit 814 includes a computer usable storage medium having stored therein computer software and/or data.

In alternative embodiments, secondary memory 808 may include other similar means for allowing computer programs or other instructions to be loaded into computer system 801. Such means can include, for example, a removable storage unit 822 and an interface 820. Examples can include a program cartridge and cartridge interface (such as that found in video game devices), a removable memory chip (such as an EPROM, PROM, or flash memory) and associated socket, and other removable storage units 822 and interfaces 820 which allow software and data to be transferred from the removable storage unit 822 to computer system 801.

In accordance with various embodiments, removable storage device 814 or 822 may take the form of a portable media such as a secure removable media (SRM) which includes means to protect against unauthorized access to stored data. For example, a SRM may include one or more processors and a secure storage area, and is able to perform security related operations, such as encryption and authentication, to control access to stored data (e.g., reading, writing, updating, etc.). The security related operations may be implemented by a module or agent (e.g., SRM agent). SRM may for example be a Secure Memory Card (SMC), Smart Card, Multi Media Card (MMC), Secure Digital (SD), USB Flash Drive (USD), and so forth. As noted above, a SRM may be used to store content and/or a Rights Object for such content. An example of a portable or removable storage device (e.g., 114, 300, 814 and 822) is discussed below with reference to FIG. 9.

Computer system 801 may also include a communications interface 824. Communications interface 824 allows software and data to be transferred between computer system 801 and external devices via communications path 827. Examples of communications interface 827 include a modem, a network interface (such as Ethernet card), Bluetooth and/or other short-range wireless network modules, etc. Software and data transferred via communications interface 827 are in the form of signals 828 which can be electronic, electromagnetic, optical or other signals capable of being received by communications interface 824, via communications path 827. Note that communications interface 824 provides a means by which computer system 801 can interface to a network such as the Internet.

The various embodiments can be implemented using software running (that is, executing) in an environment similar to that described above with respect to FIG. 8. In this document, the term "computer program product" is used to generally refer to removable storage units 814 and 822, a hard disk installed in hard disk drive 810, or a signal carrying software over a communication path 827 (wireless link or cable) to communication interface 824. A computer useable medium can include magnetic media, optical media, or other recordable media, or media that transmits a carrier wave or other signal. These computer program products are means for providing software to computer system 801.

Computer programs (also called computer control logic) are stored in main memory 807 and/or secondary memory 808. Computer programs can also be received via communications interface 824. Such computer programs, when executed, enable the computer system 801 to perform the various features as discussed herein. In particular, the computer programs, when executed, enable the processor 804 to perform the various features described herein. Accordingly, such computer programs represent controllers of the computer system 801.

The various embodiments can be implemented as control logic in software, firmware, hardware or any combination thereof. In an embodiment implemented using software, the software may be stored in a computer program product and loaded into computer system 801 using removable storage drive 812, hard drive 810, or interface 820. Alternatively, the computer program product may be downloaded to computer system 801 over communications path 827. The control logic (software), when executed by the one or more processors 804, causes the processor(s) 804 to perform the functions of the various embodiments as described herein.

In another embodiment, the various features and functions maybe implemented primarily in firmware and/or hardware using, for example, hardware components such as application specific integrated circuits (ASICs). Implementation of a hardware state machine so as to perform the functions described herein will be apparent to persons skilled in the relevant art(s).

### VI. PORTABLE OR REMOVABLE MEMORY

As described above, a portable or removable memory device (e.g., 114, 300, 814, 822) can be used to receive, maintain, store and transfer among other things various data such as content item and/or access rights as well as status information (e.g., status revocation information), or computer programs or executable code. An example is shown by removable/portable memory device 900.

As shown, memory device 900 includes one or more processors 902 (e.g., microprocessor(s)), a storage 904 for storing data, a security layer 906 for controlling access to the stored data, and a communications interface(s) 908 for communicating data to and from device 900. Security layer 906 may be implemented through a security module or agent, such as a SRM agent as noted above. As with computer system 801, memory device 900 may also perform various functions and operations through execution of computer program or computer executable code and include communications capability (e.g., wireless or wireline) depending on the type of memory, e.g., smart card, flash memory, etc.

### VII. CONCLUSION

While various embodiments of the present inventions have been described above, it should be understood that they have been presented by way of example only, and not limitation. Accordingly, it will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method implemented by a device, comprising:
maintaining information identifying a plurality of devices with which interaction has occurred;
transmitting the information identifying the plurality of devices to a remote trusted party;
receiving from the trusted party status information pertaining to a trustworthiness of the identified devices based on the transmitted information; and
controlling subsequent interaction relating to transfer or exchange of access rights for electronic content with one or more devices based on the received status information corresponding to the one or more devices.

2. The method according to claim 1, wherein the access rights comprises usage rules or permissions associated with the electronic content.

3. The method according to claim 2, wherein the access rights further comprises a content key.

4. The method according to any preceding claim, wherein the maintaining comprises storing information identifying devices to which a connection was established.

5. The method according to claim 4, wherein the stored information comprises identifiers (ID) of the devices.

6. The method according to claim 4 or 5, wherein the stored information identifies devices with which access rights to electronic content has been exchanged.

7. The method according to any preceding claim, wherein the access rights comprises a Rights Object.

8. The method according to any preceding claim, wherein the controlling controls interaction with one or more devices to establish a trusted or non-trusted network according to the status information.

9. The method according to any preceding claim, wherein the status information includes revocation status of the one or more identified device.

10. The method according to any preceding claim, wherein the controlling comprises:
checking a status of a device from the status information; and
controlling access to the access rights by the device according to the checked status.

11. The method according to claim 10, wherein access to the access rights is prohibited if the status information corresponding to the device reflects untrustworthiness.

12. The method according to claim 10 or 11, wherein access to the access rights is allowed if the status information corresponding to the device reflects trustworthiness.

13. The method according to any preceding claim, wherein the trusted party is an issuer of access rights to electronic content.

14. The method according to claim 13, wherein the issuer of access rights is a Rights Issuer.

15. The method according to any preceding claim, further comprising exchanging status information with the device.

16. The method according to any preceding claim, further comprising establishing trusted or non-trusted networks with other devices based on exchange of status information with the other devices.

17. The method according to any preceding claim, wherein the status information comprises a customized list(s) of trustworthy and/or untrustworthy devices from those identified in the transmitted information.

18. The method according to any preceding claim, wherein the status information is generated by the trusted party from information gathered through Online Certificate Status Protocol (OCSP).

19. The method according to any preceding claim, wherein the maintained information is transmitted to the trusted party when requesting therefrom access rights to a protected electronic content.

20. The method according to any preceding claim, wherein the status information includes a digital signature of the trusted entity.

21. The method according to any preceding claim, wherein the device implementing the method comprises a communications device.

22. The method according to any of claims 1 to 20, wherein the device implementing the method comprises a secure removable media.

23. An apparatus, comprising:
communications interface(s) for receiving and transmitting information; and
one or more processors executing computer executable code to facilitate control of the following operations:
maintaining information identifying a plurality of devices with which interaction has occurred;
transmitting the information identifying the plurality of devices to a remote trusted party;
receiving from the trusted party status information pertaining to a trustworthiness of the identified devices based on the transmitted information; and
controlling subsequent interaction relating to transfer or exchange of access rights for electronic content with one or more devices based on the received status information corresponding to the one or more devices.

24. A tangible computer medium having computer executable code which when executed by a computer performs the following method comprising:
maintaining information identifying a plurality of devices with which interaction has occurred;
transmitting the information identifying the plurality of devices to a remote trusted party;
receiving from the trusted party status information pertaining to a trustworthiness of the identified devices based on the transmitted information; and
controlling subsequent interaction relating to transfer or exchange of access rights for electronic content with one or more devices based on the received status information corresponding to the one or more devices.

25. A method comprising:
receiving from a device information identifying devices with which interaction has occurred with the communications device;
generating status information as to the trustworthiness of the identified devices based on the received information; and
transmitting the status information to the device.

26. The method according to claim 25, wherein the generating operation comprises:
requesting and receiving information on a trustworthiness of the identified devices from one or more trusted third parties; and
creating status information from the information received from the one or more trusted third parties.

27. The method according to claim 26, wherein the requesting employs Online Certificate Status Protocol (OCSP).

28. The method according to claim 26 or 27, wherein the status information comprises a customized list(s) of trustworthy or untrustworthy devices from those identified in the information from the communications device.

29. The method according to any of claims 25 to 28, further comprising:
receiving a request for access rights to protected electronic content from the communications device; and
providing access rights to the device.

30. The method according to claim 29, wherein the access rights is a Rights Object associated with the protected electronic content.

31. The method according to claim 29 or 30, wherein the information identifying devices is received from the device as part of a transaction for access rights.

32. The method according to any of claims 25 to 31, wherein the status information includes a digital signature of a trusted entity transmitting the status information to the device.

33. The method according to any of claims 25 to 32, wherein the status information comprises revocation status for the identified devices.

34. An apparatus, comprising:
communications interface(s) for receiving and transmitting information; and
one or more processors executing computer executable code to facilitate control of the following operations:
receiving from a device information identifying devices with which interaction has occurred with the communications device;
generating status information as to the trustworthiness of the identified devices based on the received information; and
transmitting the status information to the device.

35. A tangible computer medium having computer executable code which when executed by a computer performs the following method comprising:
receiving from a device information identifying devices with which interaction has occurred with the communications device;
generating status information as to the trustworthiness of the identified devices based on the received information; and
transmitting the status information to the device.
